# EUROPEAN PATENT APPLICATION

(11) **EP 2 407 348 A1**
(43) Date of publication of application: **18.01.2012**
(21) Application number: 11172691.5
(22) Date of filing: 05.07.2011
(51) Int. Cl.: B60R 1/00, G06K 9/00

(54) **Vision system and method for displaying a field of view dependent upon detecting an object**

(30) Priority: 16.07.2010 US 837971
(71) Applicant: Delphi Technologies, Inc., Troy, MI 48007 (US)
(72) Inventor: Fairchild, M. Ray, Kokomo, IN 46902 (US); Zimmerman, David W., 46038, IN Fishers (US); Miller, Michael E., Rossville, IN 46065 (US)
(74) Representative: Denton, Michael John

(57) **Abstract**

A vision system in a vehicle (10) and a method (600) for operating the system. The system displays a field of view that is a portion of an image (200) of an area (24) proximate to the vehicle (10). The system includes an object detection means that provides an indication of an object being present in the area (24) proximate to the vehicle (10). The field of view is selected at least in part based on the detection of the object, such as directing the field of view toward the object so the vehicle (10) driver (12) can more easily discern the presence of the object in a display (14).

## Description

### TECHNICAL FIELD

The invention relates to a vision system and a method that captures an image of an area proximate to a vehicle and displays a portion of that image to a vehicle operator. More particularly, this invention relates to a vision system and a method wherein the field of view displayed is selected based upon detecting an object in the area.

### BACKGROUND OF THE INVENTION

It is known to provide sideview and rearview mirrors on vehicles to assist a driver with viewing an area alongside and behind a vehicle. Mirrors are useful for assisting the driver in seeing obstacles prior to changing lanes or backing up. However, conventional sideview mirrors have a limited field of view and so objects in portions of the area alongside and behind a vehicle may not be seen by the driver. For example, if the mirror position is adjusted by the driver to be optimum for traveling in a forward direction where the driver is observing an adjacent traffic lane rearward the vehicle, then there may be a blind spot beside the vehicle where another vehicle may reside that is not seen by the driver either in the sideview or rearview mirrors, or in the driver's periphery vision.

It has been suggested to provide one or more cameras to captures images of the area around the vehicle to provide a field of view greater than that observable using conventional sideview or rearview mirrors. However because of the larger field of view displayed, it may be difficult for some drivers to detect small objects, such as motorcycles or distant vehicles approaching the vehicle.

### SUMMARY OF THE INVENTION

Described herein are a system, controller, and method for displaying a field of view directed to a portion of an area proximate to a vehicle. In particular, the field of view selected for display is selected based on detecting an object in the area. By way of an example, if no object is detected, the field of view may be similar to what would be seen in a typical sideview or rearview mirror. However, if an object is detected in the area proximate the vehicle, another field of view is selected so that the object is apparent to a driver viewing a display showing the selected field of view.

In accordance with this invention, a system for displaying a field of view comprising a portion of an area proximate to a vehicle is provided. The system includes a camera, and object detection means, and a display. The camera is adapted to capture an image of the area. The object detection means is adapted to detect an object presence in the area. The display is adapted to display the field of view. The field of view is selected based on the object presence.

In another aspect of this invention, a controller adapted to select a field of view comprising a portion of an image of an area proximate to a vehicle for display is provided. The field of view selected based on an object detection signal.

In another aspect of this invention, a method for selecting a field of view comprising a portion of an image of an area proximate a vehicle is provided. The method includes the steps detecting an object presence of an object in the area, and selecting the field of view based on the object presence.

Further features and advantages of the invention will appear more clearly on a reading of the following detail description of the preferred embodiment of the invention, which is given by way of non-limiting example only and with reference to the accompanying drawings.

### BRIEF DESCRIPTION OF THE DRAWINGS

This invention will be further described with reference to the accompanying drawings in which:

Fig. 1 is a perspective view of a vehicle equipped with a vision system in accordance with this invention,

Fig. 2 shows an exemplary image and views obtainable by the vision system in Fig. 1,

Fig. 3 is a cut-away perspective view of the interior of the vehicle in Fig. 1,

Fig. 4 is a block diagram of the vision system in Fig. 1,

Fig. 5 shows an exemplary image and views obtainable by the vision system in Fig. 1, and

Fig. 6 is a flow chart of a method for operating the vision system in Fig. 1.

### DESCRIPTION OF THE PREFERRED EMBODIMENT

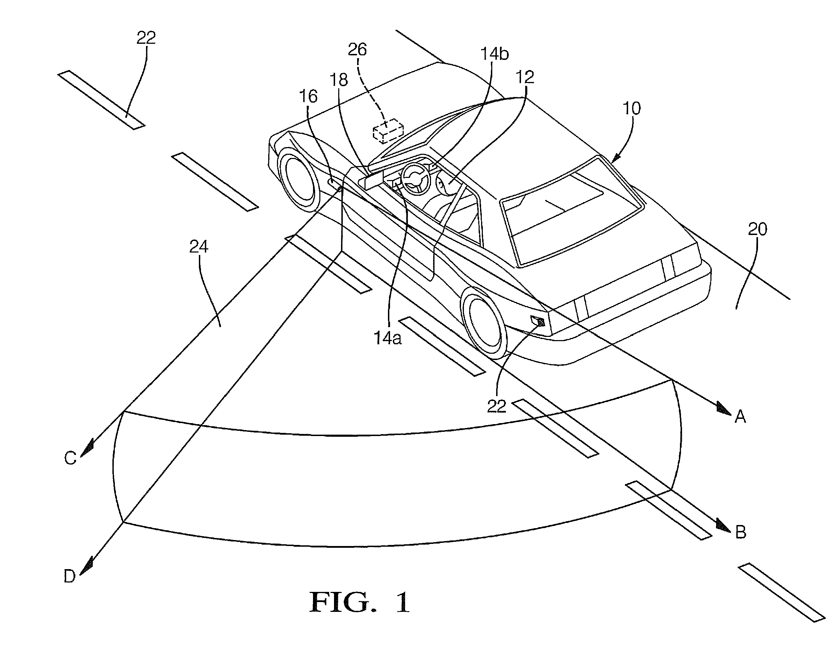

In accordance with a preferred embodiment of this invention, Fig. 1 shows a vehicle 10 operated by a driver 12 along a roadway 20 having an area 24 proximate the vehicle 10. The roadway 20 may include lane markers 22 designating a lane of a multi-lane highway so the area 24 is a traffic lane where other vehicles travel in the same direction as vehicle 10; or the roadway 20 may be a two-lane road so the area 24 is a traffic lane where other vehicles travel in the opposite direction. Alternatively, the vehicle 10 could be parallel parked on a shoulder of a roadway and the area 24 is a traffic lane; or the vehicle 10 could be backing into a parking space in a parking lot, where the area 24 is an adjacent parking space, possibly occupied by another vehicle; or the vehicle 10 could be in a driveway, where the area 24 is a lawn bordering the driveway. The vehicle may have a conventional sideview mirror 18 to assist the driver with observing part of the area 24. Fig. 1 illustrates a non-limiting example of the area 24 as being alongside and extending rearward on the driver 12 side of the vehicle 10. This particular example of the area 24 covers an area beside the vehicle that includes a portion sometimes referred to as a blind spot. As used herein, a blind spot is an area or portion of an area that is typically not viewable by the periphery vision of the driver 12, or via the mirror 18. It will be appreciated that a similar area may be defined on the passenger side of the vehicle 10, and the vehicle may be equipped with a rearview mirror (not shown) or a second sideview mirror (not shown) on the passenger side of the vehicle 10. Also, the area 24 could include an area directly behind the vehicle 10.

In accordance with an embodiment, the vehicle 10 is equipped with a vision system that may include a display 14, a camera 16, an object detection means 22, and/or a controller 26. In general, the camera 16 captures an image of the area 24, and may provide an image signal corresponding to the image of the area 24. The controller 26, or other suitable means of signal processing, may receive the image signal from the camera 16 and output a display signal to display 14 to provide the driver 12 with a field of view that includes at least a portion of the area 24. The controller 26 may also receive an object detection signal from the object detection means 22 that indicates if a presence of an object is detected in the area 24. An example of a display showing a field of view that is a portion of an image captured by a camera is described in United States Application No. 12/401,992, filed March 11, 2009, the entire disclosure of which is hereby incorporated herein by reference.

The vision system may advantageously use the object detection signal to help select an appropriate portion of the image captured by the camera 16 to provide a useful field of view for display to the driver 12. The field of view selected may be based on whether or not an object is detected in the area 24, and if detected, possibly based on where the object is located in the area 24. The controller 26 may select a portion of the area 24 as a field of view, and output an appropriate display signal so the driver 12 can see and/or readily identify the object in the display 14. The vision system described herein uses the object detection means 22 to select a field of view for display so the driver 12 is provided with more useful information than is provided by a display showing a fixed field of view, and a separate object detection system that may only provide a indication of an object in the area 24 such as by generating a sound, or illuminating an indicator light, or by vibrating a steering wheel.

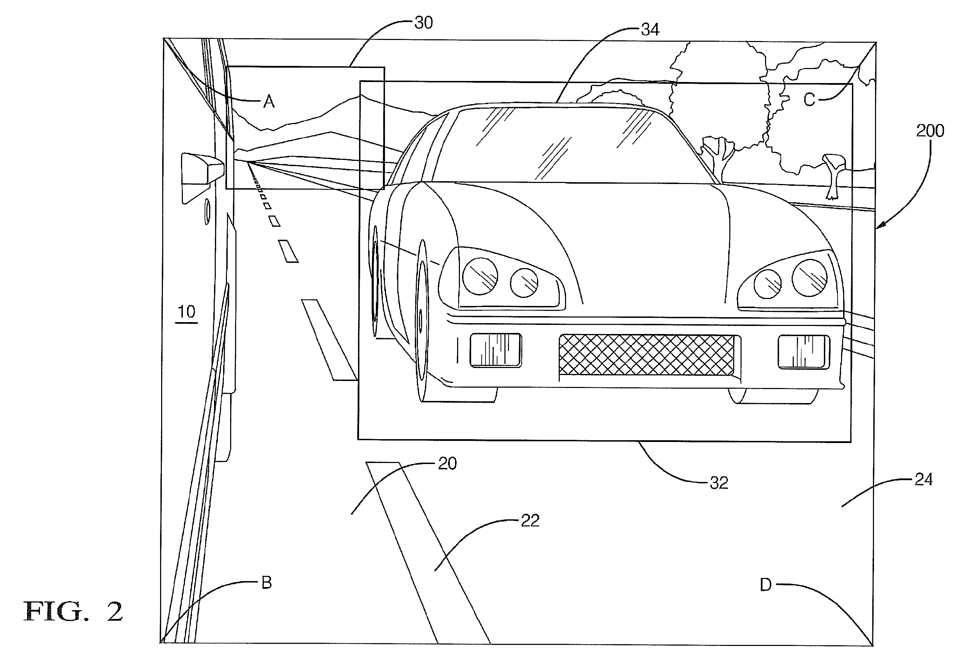

The camera 16, the display 14, the controller 26, and the occupant detection means 22 are illustrated as separate devices for the purposes of explanation. It will be appreciate that two or more of these devices may be combined or integrated in various configurations, such as combining the controller 26 and the display 14 into a single assembly, or combining the camera 16 and the object detection means 22 into a single assembly. Camera 16 is generally fixedly mounted to the vehicle and positioned on the vehicle to capture an image covering an area such as the area 24 illustrated in Fig. 1. The camera 16 is aimed and configured so the image is useful to supplement the driver's peripheral vision and/or the area viewable via the sideview mirror 18. In this non-limiting example, the camera 16 captures an image of the area 24 having boundaries by indicated by arrows A, B, C, and D. Arrows B and D coincide with the surface of the roadway, and arrows A and C point above the horizon surrounding the vehicle. In this example, arrows C and D are oriented so the image of area 24 includes the edge of the driver's peripheral vision. By way of example, Fig. 2 illustrates an image 200 that might be captured by camera 16, where the corners A, B, C, and D of image 200 correspond to arrows A, B, C, and D illustrated in Fig. 1. The area 24 captured by the camera is adjusted as necessary for different types of vehicles such as trucks and off-road equipment. Also, multiple cameras may be employed to provide images of various areas about the vehicle and those multiple images may be combined to provide a composite image of an area greater that could be captured by a single camera.

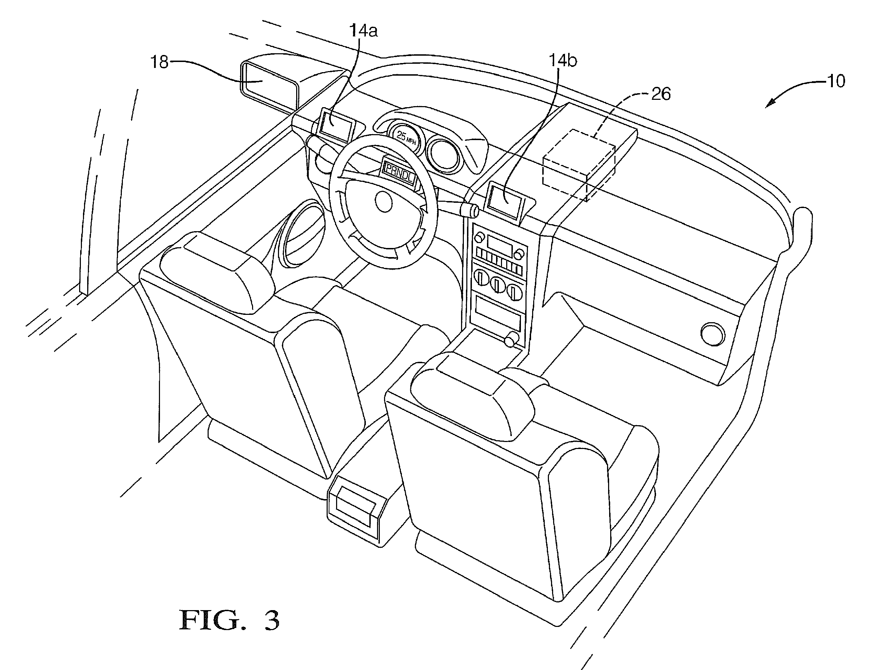

Fig. 3 shows an exemplary interior of vehicle 10. The display 14 may be positioned so the contents of the field of view displayed are readily interpreted by the driver 12. The position of the display 14 adjacent the sideview mirror 18 is a non-limiting example of such a position. In this example, the field of view shown in the display 14 may supplement what is shown in the sideview mirror 18, or may cover a field of view not shown by the mirror 18. Display 14 is preferably positioned so driver 12 can observe the area adjacent the vehicle with less head and eye movement than required for conventional sideview mirrors alone, thereby decreasing driver distraction and improving safety. The display 14 device could be used only for such a sideview vision system, or could be a general purpose display for conveying other information to the driver such as driving directions or engine operation information. The vehicle 10 may include a second display 14B that may be centrally located in the interior as illustrated, or optionally located on the passenger side of the vehicle and configured to display a field of view of the passenger side of the vehicle 10 that supplements the view provided by a passenger sideview mirror (not shown).

Referring to Fig. 1, in one embodiment the object detection means 22 includes a radar device. It has been suggested to equip a vehicle with a radar device for detecting objects such as other vehicles traveling in adjacent lanes, and then illuminating an indicator light in or near a sideview mirror when an object is detected is known. Such systems may indicate that an object is present, but do not help the driver get a better view of the object or identify the object. By including the objection means 22 with the vision system described herein, the field of view selected for display to the driver 12 can be tailored to better inform the driver of the location of the object as compared to simply illuminating an indicator light, sounding a tone, or vibrating the steering wheel. For example, in one embodiment the vision system may display a first field of view when no object is detected in the area 24, and display a second field of view distinct from the first field of view when the presence of an object is detected.

Fig. 2 illustrates non-limiting examples of a first field of view indicated by box 30 that may be suitable when the vehicle is traveling on the roadway 20 and no object is detected, that is the second vehicle 34 shown in the adjacent lane is not present within the area 24. As such, the field of view displayed on the display 14 would be what is shown in the box 30 (minus the second vehicle 34). However, if the second vehicle is detected, the system may display a second field of view indicated by box 32 that more clearly shows the driver 12 that the second vehicle 34 is present in the adjacent lane. Accordingly, the first field of view indicated by box 30 may be characterized as having a first zoom factor. As used herein, a zoom factor generally describes the degree of apparent optical zoom associated with a field of view shown on the display 14. As such, if a zoom factor of a field of view is increased, then a lateral angle or pan angle of the first field of view is decreased since increasing the zoom factor narrows the field of view and displays a smaller portion of the image captured by the camera 16. It may be preferable that the first zoom factor correspond to the zoom factor of a typical sideview mirror zoom factor so that the field of view is readily interpreted by the driver 12. It follows then that the second field of view indicated by box 32 may be characterized as having a second zoom factor less than the first zoom factor. By increasing the zoom factor and moving the center of the second field of view indicated by box 32, and showing the second field of view on the display 14, the driver 12 can readily determine that the second vehicle 34 is present in the adjacent lane.

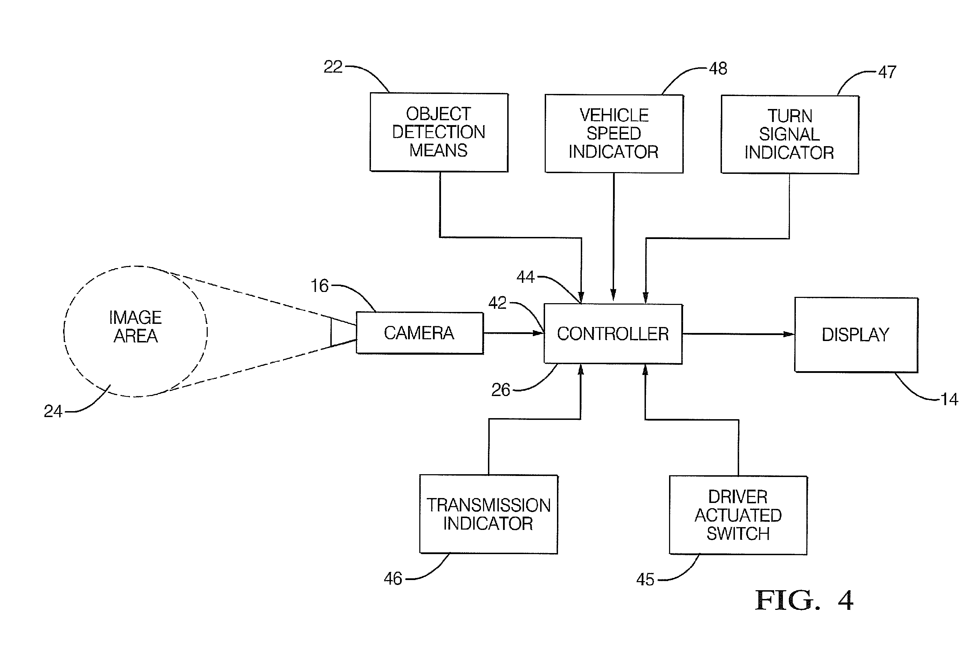

Fig. 4 illustrates an exemplary block diagram of a vision system. The system includes a controller 26 that may be adapted to receive an image signal from the camera 16. The image signal generally corresponds to an image of the area 24. The controller 26 may also be adapted to receive an object detection signal from the object detection means 22. The object detection means 22 may be a radar device. The object detection signal is generally indicative of an object presence in the area 24. The controller 26 may also be adapted to output a field of view signal to the display 14. The field of view signal generally corresponds to an image of the field of view. The controller may also be configured to select the field of view based on detecting the presence of an object in the area 24.

The controller 26 may include a processor such as a microprocessor or other control circuitry as should be evident to those in the art. The controller 26 may include memory, including non-volatile memory, such as electrically erasable programmable read-only memory (EEPROM) for storing one or more routines, thresholds and captured data. The one or more routines may be executed by the processor to perform steps for selecting a field of view that is a portion of an image of the area 24 proximate to the vehicle 10 for display to the driver 12, as described herein. The controller 26 may include an image signal input 42 adapted to receive an image signal from the camera 16 corresponding to an image of the area 24, and an object detection signal input 44 adapted to receive an object detection signal from the object detection means 22. The object detection signal is generally indicative of an object presence of an object in the area 24. The controller 26 may also include a display signal output adapted to output a field of view signal to the display 14 or 14B corresponding to the field of view selected.

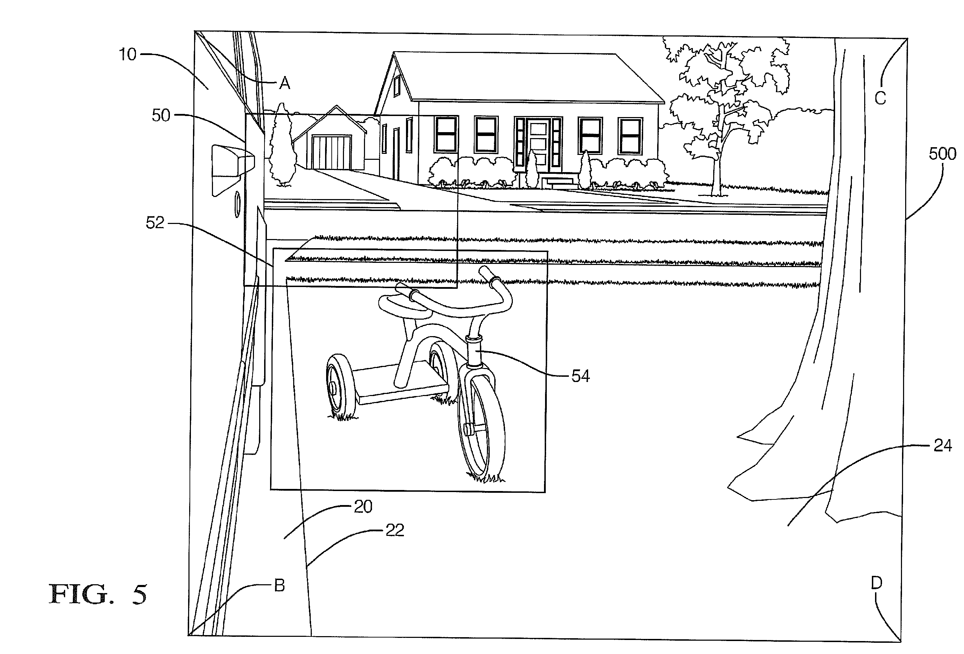

In another embodiment the vision system may include a transmission indicator 46 adapted to indicate a transmission selection such as a forward gear or a reverse gear in a transmission of the vehicle 10. Accordingly, the controller 26 may be further adapted to receive a transmission indicator signal indicative of the transmission selection. The controller may also be adapted to select the field of view based on gear selected indicated by the transmission indicator 46. For example, if a forward gear is selected, the field of view selected may be one of those indicated in Fig. 2 and described above. However, if a reverse gear is selected, an exemplary image of the area 24 may be image 500 as illustrated in Fig. 5. Similar to the explanation regarding Fig. 2, if no object is detected, that is the tricycle 54 illustrated in Fig. 5 is not present, then the field of view selected may suitably be that indicated by box 50. However, if the tricycle 54 is detected by the object detection means 22, then a field of view indicated by box 52 may be selected for display to the driver 12 on the display 14 so the driver 12 can detect that the tricycle 54 is present.

In another embodiment, the system may include a vehicle speed indicator 48 adapted to indicate a vehicle speed, and the controller 26 may be adapted to receive a vehicle speed signal from the vehicle speed indicator 48. As such, the field of view may also be selected based on the vehicle speed. For example, if the tricycle 54 is detected when the transmission is initially shifted into reverse and before the vehicle 10 starts to backup, then a suitable field of view displayed may correspond to box 52, then while the transmission is in reverse and as the vehicle 10 accelerates traveling backward, the field of view displayed to the driver 12 may shift the field of view indicated by box 52 upward so that, for the exemplary image 500, the driveway across the street is included in the field of view displayed to the driver 12. In another embodiment, the system may include a driver actuated switch 45 operable by the driver 12 to directly select a field of view, adjust a field of view, or influence the field of view selected and output to the display 14. In another embodiment, the system may include a turn signal indicator 47 that provides an indication of a turn signal being selected such that the field of view may also be selected based on the driver indicating that a turn or land change is about to be executed.

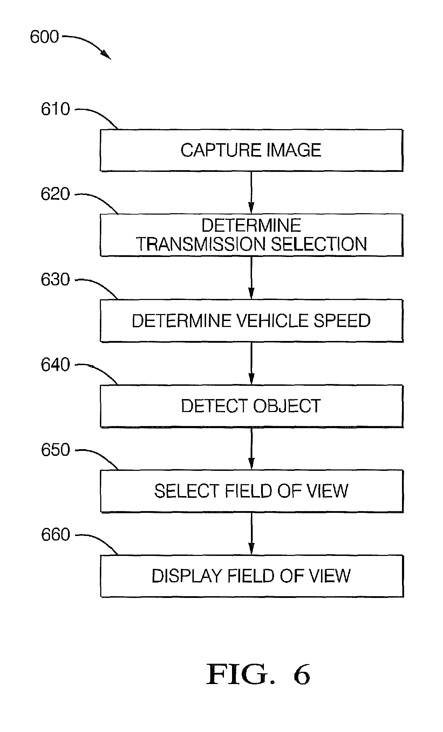

Fig. 6 illustrates a method 600 for selecting a field of view comprising a portion of an image of an area proximate a vehicle. At step 610, the camera 16 captures an image of the area 24. Step 610 may also include providing the camera 16, outputting an image signal by the camera 16, and receiving the image signal by the controller 26. In general, the image signal corresponds to an image of the area 24. The image of the area 24 may be of an area located alongside and extending rearward the vehicle, and may include a region generally known as a blind spot that is not readily observed by the driver 12 if relying only on the sideview mirror 18 and the driver's peripheral vision.

An embodiment of the method 600 may include step 620 where the transmission gear selected is determined by the vision system and/or received by the controller 26 so that the field of view selected may be adjusted or otherwise selected based on the expected direction of travel indicated by the vehicle transmission selection.

Another embodiment of the method 600 may include step 630 where a vehicle speed is determined. For example, the controller may receive a vehicle speed indicator signal indicative of a vehicle speed from a vehicle speed indicator 48, and the step of selecting a field of view is also based on the vehicle speed. The vehicle speed may influence the field of view selected for display by decreasing the zoom factor of the field of view when the vehicle is moving slow to provide a wider area of coverage near the vehicle, and increasing the zoom factor of the field of view when the vehicle is moving at a higher speed so distant objects are easier to see in the display 14. In another embodiment, the field of view may be selected base on both the transmission gear selected and the vehicle speed.

At step 640 an object presence of an object in the area may be detected by the object detection means 22. The object detection means may be a radar device mounted on the vehicle as illustrated in Fig. 1 that transmits electromagnetic energy and detect an object based on reflections thereof. Alternately, the object detection means 22 may be supplied by: an ultrasonic transducer that emits sound waves and detects an object based on reflected sound waves; or a laser base detection device such as a light detection and ranging device (LIDAR); or an infrared energy detection device; or an image processing device performing motion flow analysis on a series of images captured by the camera 16 over some period of time. In one embodiment of the vision system, the field of view is selected to display the object so the driver can readily identify the object and operate the vehicle 10 accordingly. Step 640 may also include receiving an object detection signal indicative of the object presence by the controller 26, and outputting a display signal from the controller 26 to the display 14, wherein the display signal generally corresponds to the field of view selected.

At step 650 the field of view is selected. The selection may be based on any combination of, but not limited to, a detection of an object in the area 24 or other area proximate to the vehicle, a transmission gear selection, a vehicle speed, a steering wheel angle, an indication that a turn signal is activated, or an indication from the driver that a particular field of view is desired such as would be indicated by the driver pressing a button or other such means.

At step 660, a field of view is displayed on the display 14 and/or 14B. In general, display 14 will display a field of view that is a portion of the area 24, and display 14B will display a different field of view, for example an second area on the passenger side of the vehicle 10 corresponding to an opposite of the area 24, or display a field of view that is a portion of the area generally behind the vehicle.

Therefore, a vision system and method that uses a camera to capture an image of an area, and selects a portion of that image for display based on detecting an object in the area is provided. The camera can be positioned and portions determined to provide the driver with a view that is readily comprehended when compared to conventional mirrors while providing coverage of blind spots present with conventional sideview mirrors. Arranging the camera to capture an image covering an area larger than required for viewing allows the center and effective magnification or zoom factor of the field of view displayed is readily changed so the driver is more likely to detect an object near the vehicle to avoid contacting the object with the vehicle.

While this invention has been described in terms of the preferred embodiments thereof, it is not intended to be so limited, but rather only to the extent set forth in the claims that follow.

## Claims

1. A system for displaying a field of view (30, 32, 50, 52) comprising a portion of an area (24) proximate to a vehicle (10), said system comprising:
a camera (16) adapted to capture an image (200) of the area (24);
an object detection means (22) adapted to detect an object presence in the area (24);
a controller (26) adapted to select a field of view of an image (200) based on an object detection signal;
and
a display (14) adapted to display (14) the field of view (30, 32, 50, 52), wherein the field of view is selected based on the object presence.

2. The system in accordance with claim 1, wherein the object detection means (22) is configured to detect an object (34,54) in an area (24) alongside and extending rearward of the vehicle (10).

3. The system in accordance with claim 2, wherein the object detection means (22) is configured to detect an object (34, 54) in a blind spot adjacent the vehicle (10).

4. The system in accordance with claim 1, wherein a first field of view (30) is displayed when the object presence is not detected, and a second field of view (32) distinct from the first field of view is displayed when the object presence is detected.

5. The system in accordance with claim 4, wherein the first field of view (30) has a first zoom factor that corresponds to a sideview mirror (18) zoom factor, and the second field of view (32) has a second zoom factor less than the first zoom factor.

6. The system in accordance with claim 1, wherein the system further comprises a transmission indicator (46) adapted to indicate a transmission selection, and the field of view is also selected based on the transmission indicator (46).

7. The system in accordance with claim 1, wherein the system further comprises a vehicle speed indicator (48) adapted to indicate a vehicle (10) speed, and the field of view is also selected based on the vehicle (10) speed.

8. The system in accordance with claim 1, wherein the system further comprises a controller (26)
adapted to receive an image (200) signal from the camera (16), said image (200) signal corresponding to an image (200) of the area (24);
adapted to receive an object detection signal from the object detection means (22), said object detection signal indicative of an object presence in the area (24); and
adapted to output a field of view signal to the display (14), said field of view signal corresponding to an image (200) of the field of view, wherein the controller (26) selects the field of view based on the object presence.

9. The system in accordance with claim 1, wherein said controller (26) comprises
an image signal input (42) adapted to receive an image (200) signal corresponding to an image (200) of the area (24),
an object detection signal input (44) adapted to receive an object detection signal indicative of an object presence, and
a display (14) signal output adapted to output a field of view signal corresponding to the field of view.

10. The system in accordance with claim 1, wherein the controller (26) is further adapted to receive at least one of a transmission indicator (46) signal indicative of a transmission selection and a vehicle speed indicator (48) signal indicative of a vehicle (10) speed, and the controller (26) also selects the field of view based on one or more of the transmission selection and the vehicle (10) speed.

11. A method (600) for selecting a field of view (30, 32, 50, 52) comprising a portion of an image (200) of an area (24) proximate a vehicle (10), said method (600) comprising the steps of:
detecting an object presence of an object (34, 54) in the area (24), and selecting the field of view based on the object presence.

12. The method (600) in accordance with claim 11, wherein the field of view is selected to display (14) the object (34, 54).

13. The method (600) in accordance with claim 11, wherein said method (600) further comprises the steps of
receiving an image (200) signal from a camera (16), said image (200) signal corresponding to an image (200) of the area (24),
receiving an object detection signal indicative of the object presence, and outputting a display (14) signal to a display (14), said display (14) signal corresponding to the field of view.

14. The method (600) in accordance with claim 11, wherein the step (610) of selecting the field of view includes selecting a first field of view (30) when the object presence is not detected, and selecting a second field of view (32) when the object presence is detected.

15. The method (600) in accordance with claim 11, wherein the method (600) further includes the step (610) of receiving a transmission indicator (46) signal indicative of a transmission selection, and the step (610) of selecting a field of view is also based on the transmission selection;
and the step (610) of receiving a vehicle speed indicator (48) signal indicative of a vehicle (10) speed, and the step (610) of selecting a field of view is also based on the vehicle (10) speed.
